(19) Europäisches Patentamt
European Patent Office
Office européen des brevets

(11) **EP 2 114 760 B1**

(12) **EUROPEAN PATENT SPECIFICATION**

(45) Date of publication and mention
of the grant of the patent:
**10.04.2013 Bulletin 2013/15**

(51) Int Cl.:
***B63B 25/16*** *(2006.01)*     ***B63B 11/04*** *(2006.01)*

(21) Application number: **08709523.8**

(22) Date of filing: **26.02.2008**

(86) International application number:
**PCT/GB2008/000643**

(87) International publication number:
**WO 2008/104758 (04.09.2008 Gazette 2008/36)**

(54) **SUPPORT STRUCTURE**

STÜTZKONSTRUKTION

STRUCTURE DE SUPPORT

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **26.02.2007 GB 0703693
01.03.2007 US 892293 P**

(43) Date of publication of application:
**11.11.2009 Bulletin 2009/46**

(73) Proprietor: **Jahre Group As
3113 Tonsberg (NO)**

(72) Inventor: **JONAS, Jorn, Magnus
N-3113 Tonsberg (NO)**

(74) Representative: **Piésold, Alexander James
Dehns
St Bride's House
10 Salisbury Square
London
EC4Y 8JD (GB)**

(56) References cited:
**NL-C2- 1 028 679     US-A- 3 261 586
US-A- 4 013 030     US-A- 4 672 906**

## Description

The present invention relates to a support structure for a prismatic or upright cylindrical tank in a hold of a ship or other movable transport unit or storage unit. An example of a movable storage unit is a floating offshore storage facility.

It is known to transport or store media in a tank at temperatures below ambient temperature, for example liquified natural gas (LNG), liquid ethylene, liquid petroleum gas (LPG), or liquid nitrogen. It is common to transport such media by ship and there is an increasing interest in storing such media in floating offshore storage units. The hold of the ship or other movable unit moves due to wave action and so a support structure for the tank has to be designed securely to support the tank in the hold despite such movement. A further possibility is that the tank will tend to lift due to accidental water ingress into the hold. In addition, the support structure has to be able to accommodate thermal movements of the tank relative to the hold due to temperature changes, in particular the changes which occur between the condition in which the tank is empty and in which it is full of media below ambient temperature.

Spherical tanks and support systems therefor are known. Examples are described in GB 1500799, US 3908574 and US 4013030. However, such spherical tanks are not economic because of the unused volume created below and above the sphere. This is particularly a problem for ships where costs, such as port and canal costs, depend on the size of the ship and not on the size of the cargo. Spherical tank support systems usually involve suspending the tank from a support ring extending round or just below the centre of the tank. Thus the support ring has to carry the weight of the tank and the support ring and tank have to be engineered accordingly. Various systems have been proposed for dealing with thermal movements, but suffer from these disadvantages of space inefficiency and the complexity and cost of designing and manufacturing a support ring to carry the large weight of the tank. The present invention is not concerned with spherical tanks and is not applicable thereto.

Cylindrical tanks arranged with their longitudinal axis horizontal have also been used in ships to transport media below ambient temperature. An example is described in GB 2032087. In such systems, the cylindrical tank is supported in a cradle and so whilst tipping during ship movements is not a significant problem measures are desirable to avoid floating of the tank. As with spherical tanks, horizontal cylindrical tanks result in wasted space below the tank, and so are generally uneconomic. The present invention is not concerned with horizontally mounted cylindrical tanks and is not applicable thereto.

A storage tank having an inclined base supported by a number of prismatic blocks is described in US 3261586 which constitutes the closest prior art.

Other known types of tank for transporting or storing media below ambient temperature in larger quantities, such as on ships, are prismatic-shaped tanks. These are extremely efficient in terms of space usage as they can generally be designed to conform' to the shape of the ship. In traditional designs for such tanks anti-tipping support surfaces are provided on the tanks, with corresponding hold space support surfaces being secured to the hold. However when the tanks are filled with cold gas they undergo thermal contraction which causes the gap between the tank support surfaces and the hold support surfaces to increase. Very cold gases such as LNG will cause too large a gap between the above mentioned support surfaces, thus causing the tank to be unstable when the hold space is rolling or somehow moving. Thus, in general, the support systems for these tanks can only accommodate a limited amount of thermal movement of the tank and so they have not been used for products requiring very low temperatures, such as LNG where temperatures below -160°C are typically required.

It is known from EP 0619222 (Figures 12 and 13) to provide liquefied gas carrier ships with prismatic tanks which are self-supporting and stand on their base surfaces. A vertically oriented tank support member is provided centrally of the top surface of the tank. The tank support member projects upwardly and co-operates with hold support surfaces around its circumference as an anti-tipping measure. To take the anti-tipping forces the plate structure around the support both on the hold and on the tank must be strengthened to take the forces and bending moments in any radial direction around all 360 degrees. The forces must be globally transferred to the side structure with corresponding structural requirements.

The disadvantages of such a system are recognised in EP 0619222, and the document proposes an alternative anti-tipping measure. Instead of a centrally provided support arrangement at the top of the tank there are proposed cooperating holder support surfaces and tank support surfaces at the vertical front and rear walls of the prismatic tank. The cooperating surfaces extend longitudinally and in a vertical plane with the intention of preventing side to side tipping of the tank. As a result of this arrangement, there is no need to provide any movement restraining means at the top of the tank, thereby avoiding the onerous structural requirements of supporting the tank at its top surface. However the longitudinally and vertically extending cooperating surfaces do not prevent fore and aft tipping of the tank.

According to the invention there is provided a support structure for a prismatic or upright cylindrical tank in a hold of a ship or other movable transport unit or storage unit, comprising a prismatic or upright cylindrical tank having a base, a base support on which the tank base is supported to carry the weight of the tank, a tank support surface provided on the tank, and a hold support surface provided on the hold and arranged to co-operate with the tank support surface, the support surfaces extending in a direction of thermal movement of the tank and the support surfaces extending at an angle which is intermediate to a horizontal and vertical direction so as to restrict lateral movement of the tank relative to the hold, characterised in that the cooperating tank and hold support surfaces are located above a mid-height level of the tank.

By arranging the tank and hold support surfaces to extend at an angle which is intermediate to a horizontal and vertical direction, those surfaces can co-operate to restrict or prevent lateral movement of the tank. Thus the surfaces serve to restrict tipping of the tank during movement of the ship or other movable unit. At the same time, the co-operating support surfaces can move relative to each other in the direction of thermal movement of the tank. Thus thermal movement of the tank relative to the hold caused by temperature changes may be accommodated.

The tank is preferably an independent tank. This means that the tank is self-supporting and does not form part of the structure of the ship or other movable transport unit or storage unit, e.g. the hull of a ship. The tank may be Type A, B or C according to the classification of the International Maritime Organisation (IMO).

In certain preferred embodiments the tank is a prismatic-shaped tank. Prismatic tanks provide a very efficient use of space and are therefore particularly suitable for use on ships. Whilst prismatic tanks are very beneficial for use in ships, their efficient use of space is also an advantage in the case of moveable storage units such as floating offshore storage facilities. Prismatic tanks may be made up of generally rectangular or square walls, or may have more complex shapes. For example, the side walls may be curved, or have curved portions, allowing them to maximise their occupation of available hold space in a ship or unit with a curved hull.

In other preferred embodiments the tank is a cylindrical tank, arranged upright with its central longitudinal axis vertical. Whilst such upright cylindrical tanks can be used on ships, they are particularly envisaged for use or moveable storage units such as floating offshore storage facilities. This is because space economy is not so important, whereas the cost of building the tank may be more important. Upright cylindrical tanks are relatively inexpensive and can benefit from the supporting system of the present invention.

The tank support surface and the hold support surface may be arranged to co-operate with each other by being in sliding contact. However it is preferable for there to be a gap between the surfaces. This can provide a margin due to the fact that the line of thermal expansion may not be completely straight, particularly for larger tanks. The gap is preferably small when the tank and the hold are at the same temperature. It should be small enough to ensure that, under all operational conditions for which the tank is designed, the tank will be kept in place and any small movement of the tank due to the gap will not cause a risk of damage to the tank or the hold in which it is supported. Thus, if there are movements of the hold tending to cause e.g. lateral movement of the tank, it will for practical purposes be kept in place due to the small size of the gap.

Each support surface may be provided by a respective support member. The support member may be secured to the tank or the hold structure by welding, riveting or other securing method. The tank support member may be provided on a top wall of the tank or; preferably on a side wall.

In certain preferred embodiments, there is provided a said tank support surface which faces generally downwardly and a said hold support surface which faces generally upwardly. This is referred to herein as a first type of support system. Such surfaces can restrict lateral movement of the tank relative to the hold and are generally effective as an anti-tipping measure. If the tank tends to tip, resistance is provided by the tank support surface pushing downwardly and sideways on the hold support surface. The hold support surface reacts by pushing generally upwardly and sideways in the opposite direction. In this arrangement, if the support members are provided between a side face of the tank and a side face of the hold, the support members are subjected mainly to compression forces. Thus they need to be designed primarily to resist such compression. They can therefore have a configuration which is relatively easy to design and manufacture. Also, because lateral or tipping forces will cause the support members to be pushed towards the tank or the hold to which they are secured, the risk of failure through fatigue is low.

In certain preferred embodiments, there is provided a tank support surface which faces generally upwardly and a said hold support surface which faces generally downwardly. This is referred to herein as a second type of support system. Such a pair of cooperating support surfaces can function to restrict lateral movement of the tank relative to the hold, and also so as to restrict upward vertical movement of the tank relative to the hold. Therefore the cooperating support surfaces provide both an anti-tipping function as well as an anti-floating function. In the arrangement in which each support surface is provided on a respective support member, if the tank tends to tip, then the tank support surface will apply an upward and sideways force to the hold support surface, with the sideways component of the force tending to pull the tank support member sideways away from its attachment to the tank. The sideways component of the force on the hold support member will then tend to push the hold support member sideways, and if the hold support member is attached to the hold structure laterally outwardly of the tank, this sideways component will tend to act to pull the hold support member away from its attachment to the hold structure. These effects may create a high bending moment where each support member is secured to the tank, or to the hold structure, respectively. Therefore, such support members will have to be suitably designed to withstand such forces and to be resistant to fatigue. They do however have the advantages, over the first type of support system in which the tank support surface faces generally downwardly and the hold support surface faces generally upwardly, of providing resistance to any upward tank movement, so providing better resistance to tipping and also providing resistance to floating.

In certain preferred embodiments, there will be a mixture of the first type and the second type of support system. The first type can provide economy in terms of the relative simplicity of the design and the amount of material e.g. steel required, whilst the second type can provide resistance to floating and better resistance to tipping.

The cooperating tank and hold support surfaces may be planar in form. This is a simple arrangement, which can keep costs down. A more complicated arrangement may be provided, in which the support surfaces are in the form of keyways, for example being in the nature of a dovetail arrangement, which may resist separation of the cooperating surfaces and thus provide a more secure means of restricting movement of the tank relative to the hold.

The tank base is preferably generally flat. The base preferably extends in a single plane.

The arrangement for supporting the tank at its base may take various forms. There will usually be thermal insulation between the tank base and the hold structure, provided for example by a base support made of hardwood or other strong insulating material. In a simple arrangement, the tank may simply rest on the base support without any particular measures being taken to prevent lateral movement of the tank in the base region. Lateral movement of the tank relative to the hold can then be prevented by the tank and hold support surfaces described herein. The tank and hold support surfaces can ensure that a point or region on the tank base, for example the centre of the tank base, does not move relative to the hold as the tank cools or warms. Thus, the tank can simply be placed on the bottom of the hold space, which will preferably be thermally insulated. This can provide a simple and inexpensive system. In this arrangement, no elevated support blocks would be needled so that a lot of volume can be gained and the centre of gravity is lowered. In addition, there would generally be no need to inspect a planar base support on which the tank base rests and so maintenance would be easy.

In some preferred embodiments the tank base is supported on the base support in such a way as to prevent movement at a particular point or region of the tank base relative to the hold, whilst permitting relative movement elsewhere on the tank base during thermal expansion or contraction of the tank. The point or region can be selected as required on the tank base and is most conveniently selected to be at the centre of the tank base. The desired support may be provided by guide means extending radially outwardly from the point or region where there is no relative movement, e.g. the centre of the tank base. This can allow relative thermal movement of the tank base on the base support in a radial direction while preventing sideways movement of the tank base as a whole.

The guide means may for example be in the form of a projection on the tank or the hold received in a recess in the other of the tank and the hold. By providing guide means extending in a plurality of radial directions, it is possible to prevent relative lateral movement of the tank base and hold, other than relative thermal movement, in any lateral direction.

Another way of preventing movement at a particular point or region of the tank base relative to the hold, is to provide a fixture located at the point or region. This may be provided additionally or alternatively to radial guide means. It is convenient to use a central location as this can then be the point on the tank base where there is no thermal movement of the tank relative to the hold as the tank cools or warms, whilst the rest of the tank is free thermally to move as necessary. The fixture may for example be provided on an elevated support block.

In the preferred embodiments, the direction of thermal movement of the tank and the support surfaces slopes downwardly towards the inside of the tank, e.g. downwardly in the radially inward direction. The direction of thermal movement will normally be towards the point or region on the tank base which does not move relative to the hold as the tank cools or warms.

The support structure preferably comprises a plurality of co-operating pairs of tank and hold support surfaces. By providing such co-operating pairs of support surfaces at different locations on the tank, it may be held more securely. Excessive stress concentrations at a single pair of co-operating surfaces can be avoided. The location of the co-operating pairs can be selected based on the local structural conditions, for example where there is a girder in the hold and/or on the tank. Each pair may be located at a side region of the tank. Moreover, in general, the force applied at each pair of co-operating surfaces is in one direction only , making the stress concentration at the pair easier to handle and simplifying design

Preferably, a first pair of co-operating tank and hold support surfaces extends in a first direction of thermal movement of the tank, and a second pair of cooperating tank and hold support surfaces extends in a second direction of thermal movement of the tank different from said first direction. The first and second directions of thermal movement will generally converge to a point or region where there is no relative thermal movement between the tank and the hold, for example the centre of the base of the tank.

The first and second pairs of co-operating surfaces may be arranged on opposite sides of the tank. Three or more pairs of co-operating surfaces may be provided, with the pairs being arranged around the periphery of the tank. In the case of a cylindrical tank with the axis of the cylinder arranged vertically, for example, such pairs of co-operating surfaces may be equi-angularly spaced about the circumference of the cylinder. Each pair of co-operating surfaces preferably has a different direction of thermal movement and in the preferred embodiments these directions will generally converge.

In preferred arrangements, the co-operating tank and hold support surfaces are located at or above a generally three quarter height level of the tank. By positioning the support surfaces at a relatively high location, they are more effective in preventing tipping of the tank. As the weight of the tank is supported at its base then the overall structure can provide a good support against all movements of the tank in the hold, whilst permitting relative thermal movement.

The co-operating tank and hold support surfaces may be located at a side region of the tank. If the surfaces are at the side and towards the top of the tank this can maximise their distance from the tipping point, which may be at the base on the opposite side, so requiring a relatively small force between the surfaces to provide a given moment to resist tipping (compared to an anti-tipping arrangement provided at the top centre of the tank). The strength of the surrounding structure for the co-operating tank and hold support surfaces may be reduced accordingly.

It may be desirable to provide the co-operating tank and hold support surfaces at a location lower down the tank, for example below a mid-height level of the tank. Such co-operating tank and hold support surfaces can help to resist lateral forces on the tank caused by collisions. As they will be less effective than higher up surfaces as an anti-tipping measure, it is preferred to provide cooperating tank and support surfaces at both higher and lower positions. The higher surfaces can serve to resist tipping of the tank, and the combination of the higher and lower surfaces can resist lateral translatory forces such as may occur in collisions.

Preferred embodiments comprise, at a first height level of the tank, cooperating tank and support surfaces extending in a direction of thermal movement of the tank and at an angle which is intermediate to a horizontal and vertical direction, and at a second height level of the tank, further cooperating tank and support surfaces extending in a direction of thermal movement of the tank and at an angle which is intermediate to a horizontal and vertical direction. Such a combination of support surfaces is particularly useful in enabling the base support to be of a simple design, e.g. a simple planar base support, which only has to be capable of carrying the weight of the tank but does not have to resist lateral forces. Such a simple base support has the advantages mentioned above of efficient use of hold space, lowering of the centre of gravity of the tank, and being relatively maintenance free.

Furthermore, it is usual to provide a secondary barrier externally of the tank wall which provides a primary barrier, and such an arrangement is preferred in the embodiments of this invention. The secondary barrier may be reinforced polyester cloth or the like. In known systems where a tank is supported on raised supports, the raised supports sometimes penetrate the secondary barrier. According to certain preferred embodiments of the present invention, by providing a simple base support as described above, any secondary barrier will not be penetrated. This enables simple and safe secondary barrier design.

The higher cooperating surfaces and the lower cooperating surfaces will normally extend in a direction towards a point or region on the base of the tank where it has no thermal movement relative to the hold, so that the angle to the horizontal of the extending direction of the higher surfaces preferably will be larger than the angle to the horizontal of the extending direction of the lower surfaces.

Preferably the tank is supported to resist rotation about a vertical axis thereof. Thus there may be provided means to restrict rotational movement of the tank about a generally vertical axis. The means to restrict rotational movement may comprise an abutment surface provided on the hold and arranged to co-operate with an abutment surface provided on the tank. Such an anti-rotation measure could for example be provided by the support arrangement at the base of the tank. Preferably there is an anti-rotation measure at or above a generally mid-height level of the tank. In a preferred embodiment, the hold abutment surface and the tank abutment surface are both in a generally vertical plane. Such abutment surfaces can serve to prevent rotation of the tank about a vertical axis by abutment against each other when movement of the hold tends to cause any such rotation. Such abutment surfaces may extend in a radial plane of the tank, i.e. a vertical plane passing though a vertical central axis of the tank.

Preferably the hold is provided with a plurality of such pairs of co-operating abutment surfaces. For example, a first pair may be arranged to prevent rotation in a clockwise direction and a second pair maybe arranged to prevent rotation in an anticlockwise direction. One such pair may for example be provided on one side, and the other vertical pair on the other, opposite side, of a respective pair of said support surfaces which extend at an angle intermediate to a horizontal and vertical direction.

The support structures described herein may be used for a large variety of media and will be particularly suitable and useful for the transport and storage of media at below ambient temperature. They may be used for certain media at extremely low temperatures, for example liquid natural gas (LNG), for which a temperature of e.g. -163°C may be used. Liquid hydrogen or nitrogen are other possibilities. Of course it is also possible to use the same structures for other media which are not as cold, for example liquid petroleum gas, cooled for example to - 48°C, or ethylene (e.g. -104°C).

The hold in which the support structures are used may be that of a ship or other movable transport unit or storage unit. An example of a movable storage unit is a floating offshore storage facility. Examples of movable transport units other than ships are lorries, trains or aircraft.

The invention also extends to support apparatus to be used to support a prismatic or upright cylindrical tank in a hold, for use in the support structures defined herein, the support apparatus comprising the tank support surface and the hold support surface.

Viewed from another aspect therefore the invention provides support apparatus for supporting a prismatic or upright cylindrical tank, the support apparatus comprising a tank support surface to be secured to a tank and a hold support surface to be secured to a hold and arranged to co-operate with the tank support surface, the support surfaces being arranged so that in use they will extend in a direction of thermal movement of the tank and so that they will extend at an angle which is intermediate to a horizontal and vertical direction so as to restrict lateral movement of the tank relative to the hold.

Such support apparatus may thus be provided separately of a tank and a hold and fitted thereto, either as a new installation or as a retro fit to an existing tank in a hold.

Certain preferred embodiments of the invention will now be described by way of example and with reference to the accompanying drawings, in which:

Figure 1 is a cross section in a vertical plane through an upright cylindrical tank;

Figure 2 shows an enlarged view of the arrangement for supporting the base of the tank of Figure 1;

Figure 3 is a view similar to Figure 1 showing tank and hold support surfaces;

Figure 4 shows detail "A" of Figure 3 and illustrates the interaction between the support surfaces during thermal movement;

Figure 5 is a perspective view of an upright cylindrical tank having three tank support surfaces;

Figure 6 is a perspective view of another embodiment of upright cylindrical tank;

Figure 7 is a perspective view of another embodiment of upright cylindrical tank;

Figure 8 is a perspective view of a prismatic tank;

Figure 9 is a cross-sectional view in a vertical plane of another prismatic tank;

Figure 10 shows a view on arrow "B" of Figure 9;

Figure 11 is a perspective view of another embodiment of prismatic tank;

Figure 12 is a plan view of tank bottom supports and hold base supports;

Figure 13 is a cross section on the lines XIII - XIII of Figure 12;

Figure 14 is an end elevation of a prismatic tank in a hold, the latter being shown in section;

Figure 15 is an end elevation of another prismatic tank in a hold, the latter being shown in section;

Figure 16 is an enlarged view of the one of the supports of Figure 15;

Figure 17 is a perspective view showing a prismatic tank and a hold before the tank has been received in a hold; and

Figure 18 is an enlargement of part of Figure 17 showing some of the hold supports.

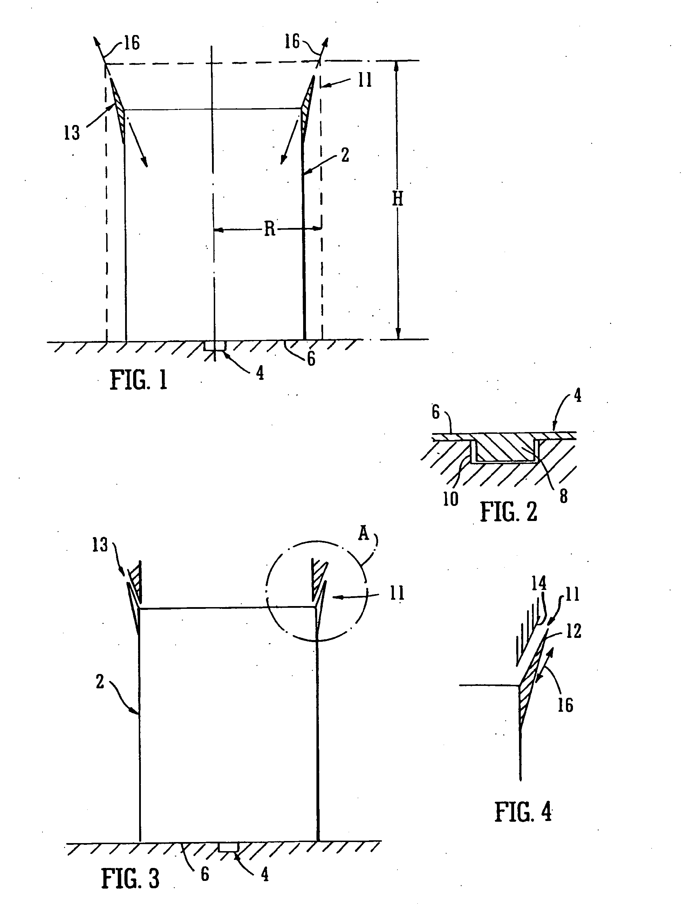

Figure 1 shows a vertical cross-section through a cylindrical tank 2 arranged with its central axis vertical. On this vertical central axis a centre bottom support 4 is provided at the base 6 of the tank. The support 4 comprises a projection 8 protruding from the tank base 6 and received in a socket 10 provided in the hold. The base support 4 prevents lateral movements along the hold space floor, whilst the downwardly facing surface of the base 6 rests on the upwardly facing tank supporting surface of the hold in horizontal contact. This allows the hold to support the weight of the tank whilst also permitting relative thermal movement of the respective surfaces as the tank cools down or warms up.

As seen in Figures 3 and 4, the tank is provided at its upper region with a tank support surface 12, fixed to the tank. The hold is provided with a hold support surface 14 fixed to the hold and arranged in co-operation with surface 12. Thus, a support 11 is provided by a pair of co-operating tank and hold surfaces 12, 14. The surfaces are spaced apart by a gap, the size of which is exaggerated in Figures 3 and 4 for illustrative purposes. The tank and hold support surfaces 12 and 14 are arranged to extend in a direction shown by line 16 which is arranged at an angle intermediate between a horizontal and vertical direction, i.e. it is neither horizontal nor vertical. The direction extends downwardly towards the inside of the tank. A second support 13 is provided by a pair of co-operating tank and hold surfaces on the diametrically opposite side of the tank.

Figure 1 shows in solid lines the tank 2 when it is cold and in dotted lines the tank when it is at a higher temperature and has undergone thermal expansion. A dotted line 16 is indicated for each of the supports 11, 13 consisting of co-operating surfaces. Each dotted line is defined by the locus of a point on the tank in its different positions as the tank undergoes shrinkage due to cooling down or expansion due to warming up. This line defines the direction in which the co-operating support surfaces extend. It will be appreciated that the hold space structure will have negligible thermal movements when the tank cools down or warms up because the tank is thermally insulated. The hold support surface 14 is fixed to the hold whilst the tank support surface 12 slides relative to the fixed surface 14 during thermal movements.

The direction in which the co-operating surfaces 12, 14 extends has a component in the horizontal direction and a component in the vertical direction, being neither vertical nor horizontal. The horizontal component allows the fixed hold surface 14 to prevent upward movement of the tank, which might otherwise occur due to flotation resulting from accidental ingress of water into the hold or because of a sudden downward movement of the hold due to waves. The vertical component of the direction of the co-operating surfaces serves to prevent horizontal movement of the tank relative to the hold, which might otherwise occur due to sideways movement of the hold. As seen in Figures 3 and 4, the support 11 consisting of co-operating surfaces 12, 14 will prevent sideways movement of the tank to the left, while the support 13 consisting of co-operating surfaces on the opposite side of the tank will prevent its movement to the right.

Any tendency of the tank to tip to the left about a tipping point at the bottom left corner of the tank as seen in Figure 3 will be resisted by the support 11. This resistance is applied at a point on the tank at a distance from the tipping point consisting of the full diagonal of the tank i.e. a point on the tank at a maximum distance from the tipping point. Thus, the necessary force to keep the tank in place during rolling is minimized (Force x length between tipping point and support = moment to keep the tank in place). The practical consequence is that the dimensions of the supports and their surrounding structure can be reduced accordingly.

Thus, if wave action tends to cause the tank to capsize, this is prevented by the co-operating supports at the top of the tank. The same supports serve to prevent flotation of the tank. No stresses are caused in the tank due to its thermal movement, because of the arrangement of the support surfaces in line with the direction of such thermal movements. Therefore the tank has the ability to move freely and independently of the hold space supporting structure through the entire temperature range for which the tank is designed.

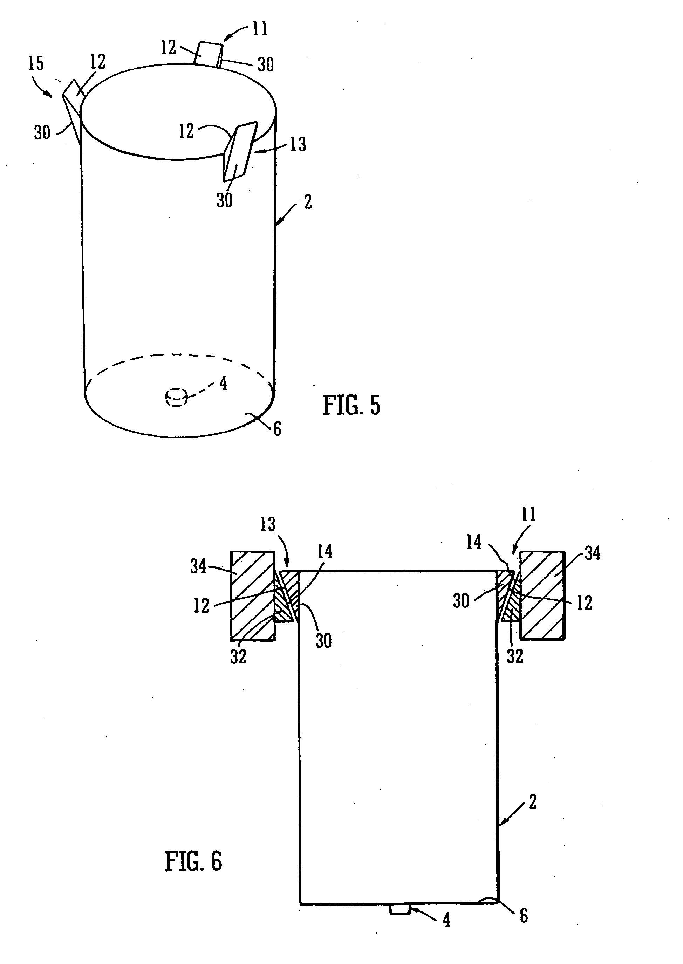

The system of the invention is suitable for a wide variety of prismatic and upright cylindrical tank designs and shapes. Figure 5 shows an upright cylindrical tank with three supports 11, 13, 15 consisting of co-operating tank and hold surfaces. In the drawing only the tank support surfaces 12 are shown for clarity, but it will be appreciated that positioned above the tank surfaces will be respective hold surfaces 14. Each tank support surface 12 is provided on a respective tank support member 30.

Figure 5 shows an example of an upright cylindrical tank. Due to the fact that cylinders need a higher wall thickness for greater cylinder diameter and the fact that large diameters will create a large free surface and corresponding sloshing aspects, it will be preferred to provide smaller diameter but higher length cylinders placed side by side in some uses, for example offshore storage. Upright cylindrical tanks are expected to be of significant interest for offshore storage. The present invention can provide an ideal support structure for such tanks because standing cylinders will have significant thermal movements in the vertical direction.

Figure 6 shows an elevation view of another upright cylindrical tank. In this case, the tank support member 30 of tank supports 11, 13 has a tank support surface 12 which faces downwardly and sideways. A hold support member 32 is secured to the hold structure 34 and has a hold support surface 14 which faces upwardly and sideways. Thus the positions of the co-operating tank and hold support surfaces 12 and 14 are reversed compared to those of Figure 5. Such a reversed arrangement can be used on any of the tanks described herein. Figure 6 shows an example of support system referred to above as a first type of support system, whilst Figure 5 and the other figures show examples of support system of the second type.

An advantage of the first type of support system, as seen in Figure 6, is that after the hold support members 32 have been secured in place in a hold, the tank 2 may be lowered into place. This may facilitate the assembly or loading process.

Any tendency of the tank of Figure 6 to tip to the left about a tipping point at the bottom left corner of the tank as seen in Figure 6 will be resisted by the support 13. If the tank of Figure 6 were arranged on a base support which did not provide any resistance to lateral movement, then any tendency for the tank to slide to the left as seen in Figure 6 would be resisted by the support 13. In either the tipping or sliding case, the forces acting between the co-operating tank and hold support surfaces 12 and 14 are mainly compressive forces, and the forces acting between the tank support member 30 and the tank wall are also mainly compressive. Similarly, the forces acting between the hold support member 32 and the hold structure 34 are mainly compressive. It will therefore be seen that the tank and hold support members 30 and 32 can have a configuration which is easy to design and manufacture, and their attachment to the tank and bulkhead respectively is also relatively straightforward. The forces which they will have to resist in use tend to push the components together and so they do not have to be heavily engineered.

It will however be noted that in a support system of the first type, where the tank support surface faces downwardly and the hold support surface faces upwardly, as in Figure 6 for example, then the co-operating surfaces do not perform an anti-floating function. Where this is desired it will have to be provided by something else, for example a support system of the second type in which the tank support surface faces upwardly and the hold support surface faces downwardly. Such anti-flotation means may require more robust engineering, because the compressive forces between the co-operating tank and hold support surfaces, as seen in e.g. Figures 3 and 4, may tend to create large bending moments where the corresponding support members on which the support surfaces are provided are secured to the tank and the hold respectively.

In certain preferred embodiments, there may be a plurality of supports 11, 13 with at least one being of the first type in which the tank support surface faces generally upwardly and the hold support surface faces generally downwardly, and at least one being of a second type in which the tank support surface faces generally downwardly and the hold support surface faces generally upwardly.

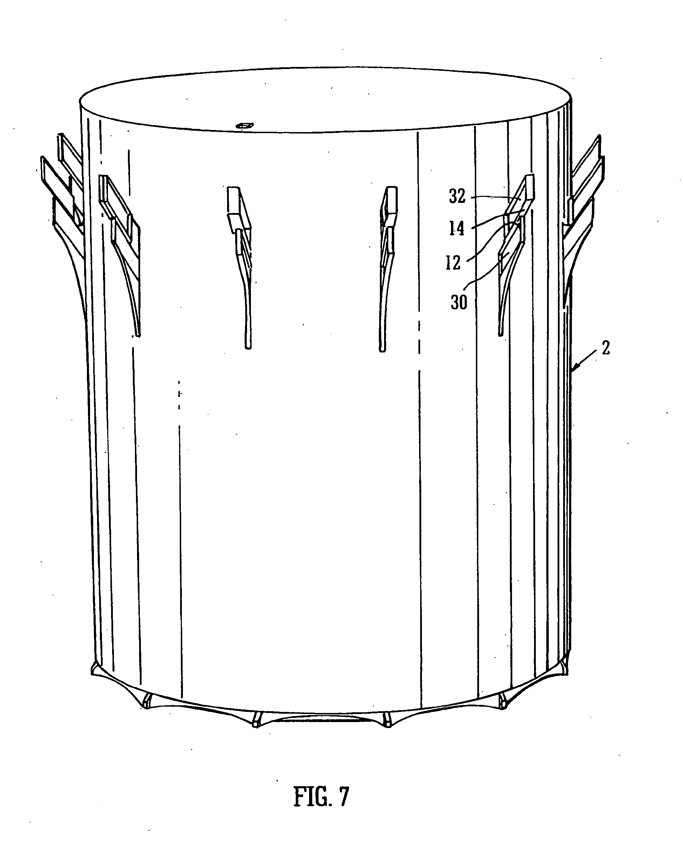

Figure 7 shows an upright cylindrical tank 2 having a plurality of supports 11, 13, 15 etc. arranged around the circumference of the tank. A typical support 11 has a support member 30 secured to the tank and provided with an upwardly and laterally inwardly facing tank support surface 12. The support 11 has a hold support member 32 provided with a downwardly and laterally outwardly facing surface 14. The hold support member 32 is secured to the hold structure but this is not shown in the drawing.

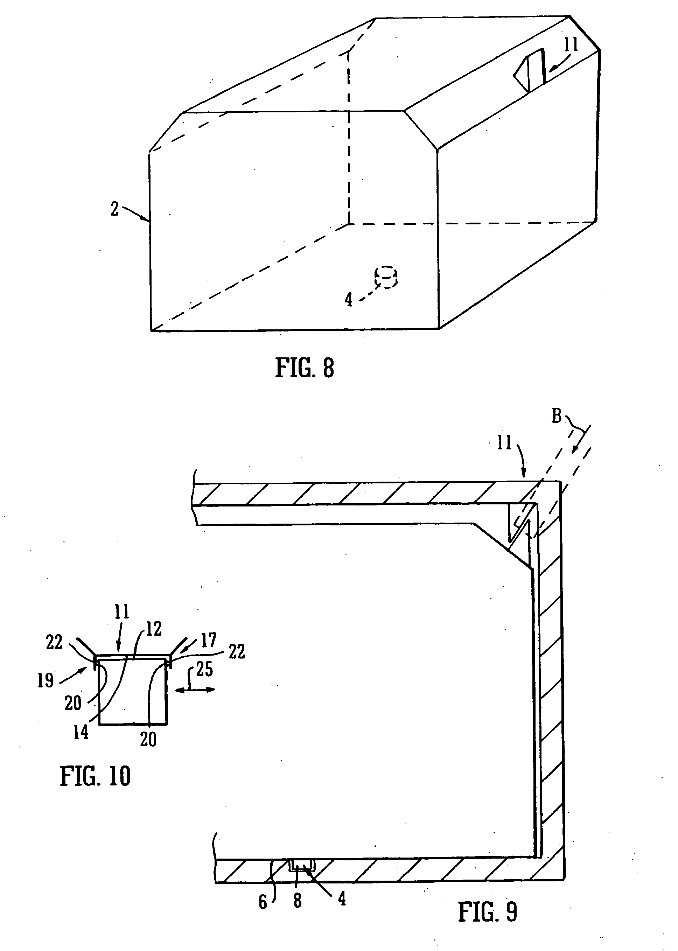

Figure 8 shows a tank of a design suitable for LNG or LPG transport or storage. A tank support surface 12 is shown on one side of the tank, for co-operation with a hold support surface which is not shown, to form a support 11. Another support consisting of a pair of co-operating surfaces is provided but not shown on the other side of the tank. This second pair is symmetrical with the first pair of support 11, about a vertical plane half way between the two pairs. The tank is provided with a base support 4.

Figures 9 and 10 show a modification of the arrangement of Figure 8. In this case, the support 11 consisting of co-operating surfaces 12, 14 is provided as before. The hold surface 14 is fixed, whilst the tank surface 12 is able to move with thermal movements of the tank. In addition, the hold is provided with a pair 17 of vertical abutment surfaces 20, 22. The first abutment surface 20 is provided on the hold so as to be fixed. The second abutment surface is provided on the tank. A second pair 19 of abutment surfaces also has a first abutment surface 20 and a second abutment surface 22, the surface 20, belonging to the hold and the surface 22 belonging to the tank.

A base support 4 is provided to fix the tank from sideways movement across the floor of the hold. The support 11 consisting of co-operating surfaces prevents sideways and upward movement of the tank, as previously described. The pairs 17, 19 of abutment surfaces serve to prevent rotation of the tank around the base support 4. The directions of potential rotation are shown at arrow 25 in Figure 10. If the tank tends to rotate such that it would move to the right as seen in Figure 10, then the abutment hold surface 20 of pair 17, by its engagement with abutment tank surface 22, prevents such movement. If the tank tends to move to the left as seen in Figure 10, then the abutment hold surface 20 of pair 19, by its engagement with abutment tank surface 22 of pair 19, prevents that movement. At the same time, the abutment surfaces of the pairs 17, 19 are aligned with the direction of thermal movement of the tank and so do not inhibit such movement or put stress on the tank when its temperature changes.

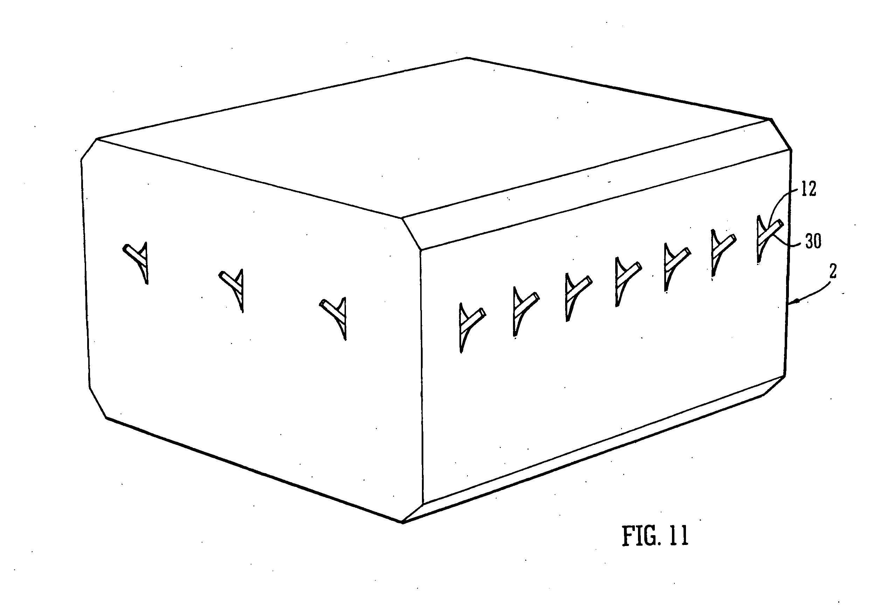

Figure 11 shows a prismatic tank provided with tank support members 30 similar to those shown in Figure 7. In this case the hold support members are not shown. A plurality of tank support members 30 are provided along each of the four vertical walls of the prismatic tank.

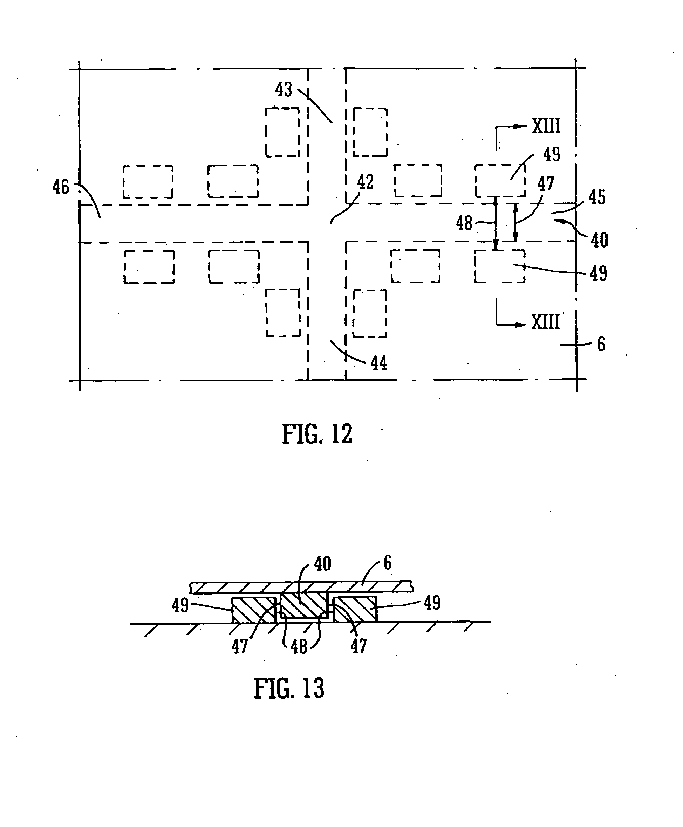

Figures 12 and 13 show an alternative design of base support. The tank base 6 is provided with a cross-shaped projection 40 which protrudes downwardly therefrom. The centre 42 of the cross is arranged to be at the centroid of the tank base 6. The projection 40 has four arms 43, 44, 45 and 46 which project radially from the centre 42 outwardly towards the periphery of the tank base 6. The projection arm 45 has a pair of lateral faces 47 which are arranged to engage with lateral faces 48 of respective hold support blocks 49. A second pair of hold support blocks 49 is also provided spaced longitudinally from the first pair along projection arm 45. Projection arm 46 similarly is provided with two pairs of support blocks 49. Projection arms 43 and 44 are each provided with a pair of support blocks 49.

The arrangement shown in Figures 12 and 13 serves to prevent all lateral movement of the tank relative to the hold, other than relative thermal movement. The centre point 42 is at a position where there is no relative thermal movement. As the tank expands or contracts, the engaging surfaces 47 and 48 allow relative thermal movement between the tank and the hold to occur.

The arrangement shown in Figure 12 could be modified so that the engaging surfaces 47 and 48 extend more exactly along a vertical plane passing through the centre point 42, i.e. more exactly in a radially outward direction. However, in practice this may not be necessary as a small gap can be provided between the surfaces 47 and 48 allowing a tolerance for the fact that the surfaces are not on an exact radial plane.

Although shown in relation to a prismatic tank the arrangement shown in Figures 12 and 13 is also applicable to upright cylindrical tanks.

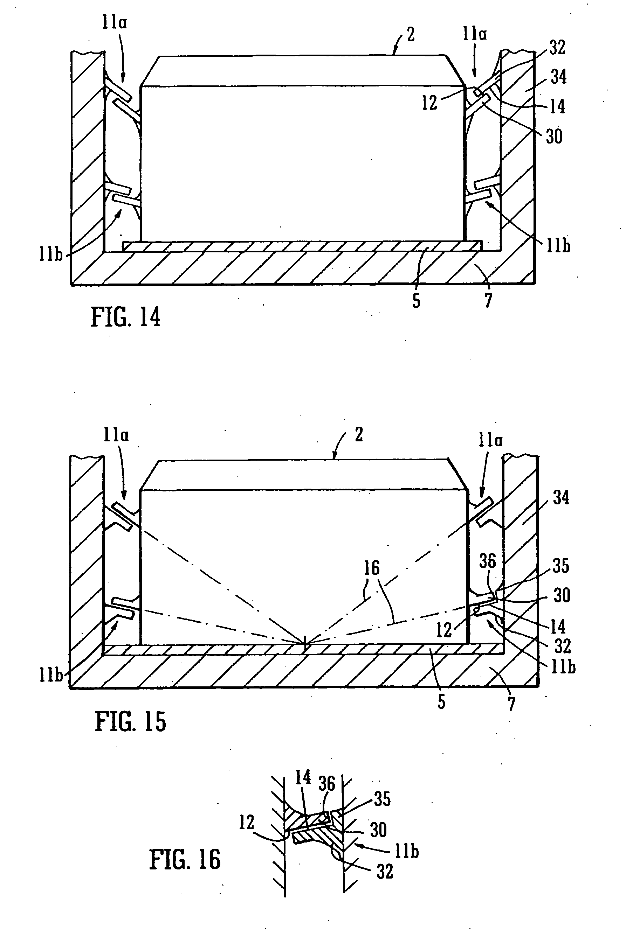

Figure 14 shows a prismatic tank 2 supported on a base support 5 made of hardwood or other thermally insulating material. The base support 5 rests on the floor 7 of a hold. The tank is provided at a first height level, above the mid-height of the tank, with a support 11a. A tank support member 30 is secured to a side wall of the tank and has a tank support surface 12 which faces upwardly and sideways. A hold support member 32 is secured to the hold structure 34 and has a hold support surface 14 which faces downwardly and sideways. The cooperating tank and hold support surfaces 12 and 14 extend in a direction towards the centre of the base of the tank, along a direction of thermal movement.

Another tank support 11b is provided on the same side of the tank at a second, lower height level, generally below a mid-height of the tank. This also has cooperating tank and hold support surfaces 12 and 14 which extend along a direction of thermal movement of the tank. In this case the direction of thermal movement also points to the centre of the base of the tank. The angle of inclination to the horizontal is smaller than the angle of inclination of the horizontal of the direction of thermal movement at the upper support 11a.

On the left hand side of Figure 14 it will be seen that another upper tank support 11a and another lower tank support 11b are provided. Similar upper and lower tank supports may be provided on the other two side walls of the tank but are not shown. At both the first and second levels, plural tank supports may be provided along each of the side walls.

The supports 11a, 11b serve to prevent tipping of the tank and also to prevent lateral translatory movement of the tank. Therefore no special measures against lateral movement need to be taken at the base of the tank and the base support 5 is a simple planar member. The supports shown are of the second type (tank support surface below hold support surface) and therefore provide an anti-float function too.

The prismatic tank 2 of Figure 15 is similar to that of Figure 14, with the main difference being that the positions of the tank and hold support surfaces 12 and 14 have been reversed. Thus the tank support member 30 is secured to a side wall of the tank and has a tank support surface 12 which faces downwardly and sideways. A hold support member 32 is secured to the hold structure 34 and has a hold support surface 14 which faces upwardly and sideways. The cooperating tank and hold support surfaces 12 and 14 extend in a direction 16 towards the centre of the base of the tank, along a direction of thermal movement.

The support 11b shown at the bottom right of the tank in Figure 15 is shown enlarged in Figure 16. This support (which may be one of a plurality of such supports along the side of the tank at the lower height level shown) is provided with a stopper 35 formed on the hold support member 32, and with an end face 36 formed on the tank support member 30. The stopper 35 and the end face 36 are arranged so that when the tank is at ambient temperatures they are in contact. As the tank cools when it receives its low temperature cargo, a gap will develop between stopper 35 and end face 36.

The supports 11 a and 11b will support the tank and prevent it from tipping if the hold tilts at an angle from the vertical, for example up to 30° from the vertical. The tank support members 30 will tend to rest on the hold support members 32 in this situation. The stopper 35 is provided primarily to restrict movement of the tank in response to dynamic forces caused by a collision. Even when the tank is full of low temperature medium and has thermally contracted its movement in response to such a dynamic force will be limited to the width of the gap which has opened up between the stopper 35 and the end face 36.

A stopper 35 is shown only on a lower support 11b. In general it is expected that such a stopper will not be necessary on the higher supports 11a as the tank and hold support surfaces 12 and 14 are at a greater angle to the horizontal and so are better able to resist dynamic forces even if the hold is tilted away from the vertical.

A stopper 35 is shown only on one side of the tank and not on the opposite side of the tank. Such a stopper may be particularly useful on a forward side of the tank, and may not be required on a rear or aft side of the tank. This is because in general the tank has to be supported against higher collision forces tending to throw the tank forwardly than those tending to throw the tank rearwardly.

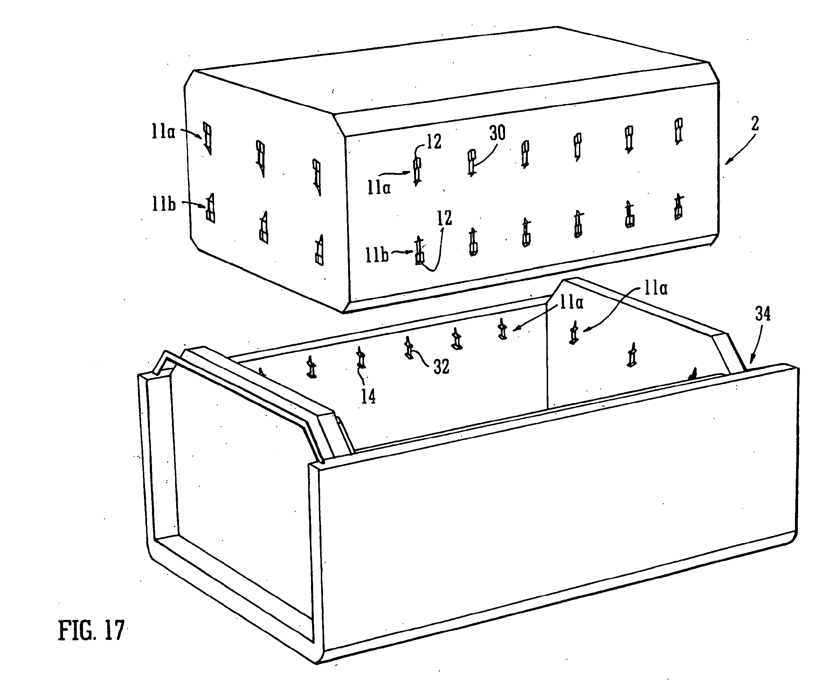

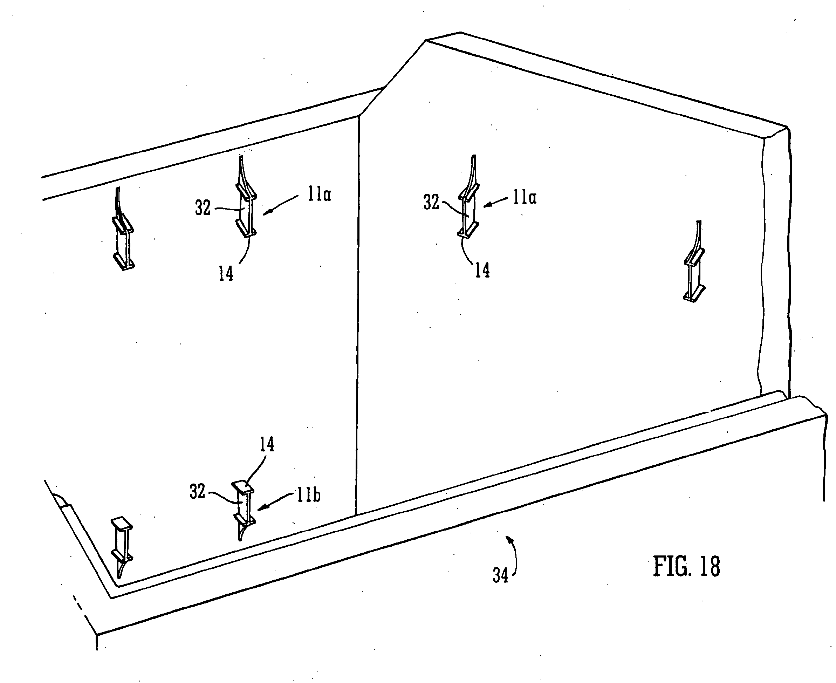

Figures 17 and 18 show a tank 2 and a hold structure 34. In this case the tank has an upper row of supports 11a with tank support members 30 having tank support surfaces 12 which face upwardly and sideways. The corresponding hold support members 32 are secured to the hold structure. 34 and have hold support surfaces 14 which face downwardly and sideways.

At a lower level, there is a row of supports 11b. In this case the tank support members 30 have tank support surfaces 12 which face downwardly and sideways. The hold support members 32 have hold support surfaces 14 which face upwardly and sideways. In all cases the cooperating tank and hold support surfaces 12 and 14 extend in a direction towards the centre of the base of the tank, along a direction of thermal movement.

Thus in the embodiment of Figures 17 and 18 the upper supports 11a are like those of the embodiment of Figure 14, whilst the lower supports 11b are like those of the embodiment of Figures 15 and 16. In the assembly of the embodiment of Figures 17 and 18, the lower set of hold support members 32 are prefabricated and attached to the hold structure 34, and both the lower and upper sets of tank support members 30 are prefabricated and attached to the tank 2. The tank is then lowered into the hold and then the upper set of hold support members 32 are secured to the hold after the tank is in place.

Supports at two different height levels are shown in Figures 14 to 18 on prismatic tanks, but would also be applicable to upright cylindrical tanks.

An example of how to design the direction in which the cooperating tank and hold support surfaces extend will now be provided in relation to an upright cylindrical tank as shown in Figure 1.

Assume a support 11 on the top side of the tank is positioned at height H above the tank bottom and at horizontal distance R from the vertical centre line of the tank. The slope coordinates (x, y) of the line which the support will follow during thermal contraction could be calculated as follows:

$$x = \alpha\, H\, \Delta T$$

$$y = \alpha\, R\, \Delta T$$

where

a = coefficient of linear expansion in the horizontal direction and in the vertical direction at the cross section which goes through the support 11 and the vertical centre line of the tank, and

$\Delta T$ = cooling down temperature intervals for which x, y is calculated, shown by the dotted lines 16 in Fig. 1.

The orientation of the dotted lines 16 line will be the same during thermal expansion as when cooling down.

It will be appreciated that the use of the words "horizontal" and "vertical" in this specification are intended to refer to a situation when the hold of the ship or other transport or storage unit is in an upright, non-tilted condition. Of course, during movement of the ship or other unit, the structure will tilt from the upright position and the various support surfaces described herein will tilt with that movement.

References in this specification to surfaces facing generally upwardly or generally downwardly mean that the surface in question faces in a direction with an upward or downward component, respectively, as well as a lateral component.

**Claims**

1. A support structure with a prismatic or upright cylindrical tank (2) in a hold of a ship or other movable transport unit or storage unit, comprising a prismatic or upright cylindrical tank having a base (6), a base support on which the tank base (6) is supported to carry the weight of the tank a tank support surface (12) provided on the tank, and a hold support surface (14) provided on the hold and arranged to co-operate with the tank support surface (12), the support surfaces 12,14) extending in a direction of thermal movement of the tank and the support surfaces (12,14) extending at an angle which is intermediate to a horizontal and vertical direction so as to restrict lateral movement of the tank relative to the hold, **characterised in that** the cooperating tank and hold support surfaces (12, 14) are located above a mid-height level of the tank (2).

2. A support structure as claimed in claim 1 , comprising a said tank support surface (12) which faces generally downwardly and a said hold support surface (14) which faces generally upwardly.

3. A support structure as claimed in claim 1 or 2, comprising a said tank support surface (12) which faces generally upwardly and a said hold support surface (14) which faces generally downwardly, so as to restrict upward vertical movement of the tank (2) relative to the hold.

4. A support structure as claimed in claim 1 , 2 or 3, comprising a plurality of pairs of co-operating tank and hold support surfaces (12, 14).

5. A support structure as claimed in claim 4, wherein a first pair of co-operating tank and hold support surfaces (12, 14) extends in a first direction of thermal movement of the tank (2), and a second pair of co-operating tank and hold support surfaces (12, 14) extends in a second direction of thermal movement of the tank different from said first direction.

6. A support structure as claimed in claim 5, wherein three or more pairs of cooperating tank and hold support surfaces (12,1 4) are provided, each pair of cooperating surfaces having a different direction of thermal movement

7. A support structure as claimed in any preceding claim, wherein the tank base (6) is supported on the base support in such a way as to prevent movement at a particular point or region of the tank base relative to the hold, whilst permitting relative movement elsewhere on the tank base during thermal expansion or contraction of the tank (2).

8. A support structure as claimed in any preceding claim, comprising, at a first height level of the tank (2), cooperating tank and hold support surfaces (12, 14) extending in a direction of thermal movement of the tank and at an angle which is intermediate to a horizontal and vertical direction, and at a second height level of the tank, further cooperating tank and hold support surfaces (12, 14) extending in a direction of thermal movement of the tank and at an angle which is intermediate to a horizontal and vertical direction.

9. A support structure as claimed in any preceding claim, comprising means to restrict rotational movement of the tank (2) about a generally vertical axis.

10. A support structure as claimed in claim 9, wherein said means to restrict rotational movement comprises an abutment surface (20) provided on the hold and arranged to co-operate with an abutment surface (22) provided on the tank (2).

11. A support structure as claimed in claim 10, wherein the hold abutment surface (20) and the tank abutment surface (22) are both in a generally vertical plane.

**Patentansprüche**

1. Stützstruktur mit einem prismatischen oder aufrechten zylindrischen Tank (2) im Laderaum eines Schiffes oder einer anderen beweglichen Transporteinheit oder Lagereinheit, umfassend einen prismatischen oder aufrechten zylindrischen Tank mit einem Boden (6), einer Bodenabstützung, auf der der Tankboden (6) abgestützt ist, um das Gewicht des Tanks zu tragen, ein Tankstützfläche (12), die am Tank bereitgestellt ist, und eine Laderaum-Stützfläche (14), die am Laderaum bereitgestellt und dafür angeordnet ist, mit der Tankstützfläche (12) zusammenzuwirken, wobei sich die Stützflächen (12, 14) in einer Richtung thermischer Bewegung des Tanks erstrecken und sich die Stützflächen (12, 14) in einem Winkel erstrecken, der zwischen einer horizontalen und einer vertikalen Richtung liegt, so dass die seitliche Bewegung des Tanks relativ zum Laderaum beschränkt wird, **dadurch gekennzeichnet, dass** die zusammenwirkenden Tank- und Laderaum-Stützflächen (12, 14) oberhalb einer Mittelhöhe des Tanks (2) angeordnet sind.

2. Stützstruktur nach Anspruch 1, umfassend eine Tankstützfläche (12), die allgemein abwärts gerichtet ist, und eine Laderaum-Stützfläche (14), die allgemein aufwärts gerichtet ist.

3. Stützstruktur nach Anspruch 1 oder 2, umfassend eine Tankstützfläche (12), die im Allgemeinen aufwärts gerichtet ist, und eine Laderaum-Stützfläche (14), die in Allgemeinen abwärts gerichtet ist, so dass die vertikale Aufwärtsbewegung des Tanks (2) relativ zum Laderaum beschränkt ist.

4. Stützstruktur nach Anspruch 1, 2 oder 3, mehrere Paare zusammenwirkender Tank- und Laderaum-Stützflächen (12, 14) umfassend.

5. Stützstruktur nach Anspruch 4, wobei sich ein erstes Paar zusammenwirkender Tank- und Laderaum-Stützflächen (12, 14) in einer ersten Richtung thermischer Bewegung des Tanks (2) erstreckt und sich ein zweites Paar zusammenwirkender Tank- und Laderaum-Stützflächen (12, 14) in einer zweiten Richtung thermischer Bewegung des Tanks erstreckt, die sich von der ersten Richtung unterscheidet.

6. Stützstruktur nach Anspruch 5, wobei drei oder mehr Paare zusammenwirkender Tank- und Laderaum-Stützflächen (12, 14) bereitgestellt sind, wobei jedes Paar zusammenwirkender Flächen eine andere Richtung thermischer Bewegung aufweist.

7. Stützstruktur nach einem der vorhergehenden Ansprüche, wobei sich der Tankboden (6) derart auf der Bodenabstützung abstützt, dass die Bewegung an einem bestimmten Punkt oder Bereich des Tankbodens relativ zum Laderaum verhindert wird, während eine Relativbewegung an anderen Stellen des Tankbodens während einer thermischen Ausdehnung oder Schrumpfung des Tanks (2) gestattet wird.

8. Stützstruktur nach einem der vorhergehenden Ansprüche, umfassend zusammenwirkende Tank- und Laderaum-Stützflächen (12, 14) auf einem ersten Höhenniveau des Tanks (2), die sich in einer Richtung thermischer Bewegung des Tanks und in einem Winkel erstrecken, der zwischen einer horizontalen und einer vertikalen Richtung liegt, und auf einem zweiten Höhenniveau des Tanks weitere zusammenwirkende Tank- und Laderaum-Stützflächen (12, 14), die sich in einer Richtung thermischer Bewegung des Tanks und in einem Winkel erstrecken, der zwischen einer horizontalen und einer vertikalen Richtung liegt.

9. Stützstruktur nach einem der vorhergehenden Ansprüche, Mittel umfassend, um die Drehbewegung des Tanks (2) um eine allgemeinvertikale Achse zu beschränken.

10. Stützstruktur nach Anspruch 9, wobei das Mittel zum Beschränken der Drehbewegung eine Widerlagerfläche (20) umfasst, die am Laderaum bereitgestellt und dafür angeordnet ist, mit einer Widerlagerfläche (22) zusammenzuwirken, die am Tank (2) bereitgestellt ist.

11. Stützstruktur nach Anspruch 10, wobei sowohl die Laderaum-Widerlagerfläche (20) als auch die Tank-Widerlagerfläche (22) in einer allgemeinvertikalen Ebene liegen.

**Revendications**

1. Structure de support à réservoir prismatique ou cylindrique droit (2) dans une cale d'un bateau ou d'une autre unité de transport ou de stockage mobile, comprenant un réservoir prismatique ou cylindrique droit ayant une base (6), un support de base sur lequel la base (6) du réservoir est supportée pour porter le poids du réservoir, une surface de support de réservoir (12) disposée sur le réservoir et une surface de support de cale (14) disposée sur la cale et agencée pour coopérer avec la surface de support de réservoir (12), les surfaces de support (12, 14) s'étendant dans une direction de mouvement thermique du réservoir et les surfaces de support (12, 14) s'étendant à un angle qui est intermédiaire entre une direction horizontale et une direction verticale de manière à limiter le mouvement latéral du réservoir par rapport à la cale, **caractérisée en ce que** les surfaces de support coopérantes (12, 14) de réservoir et de cale sont situées au-dessus d'un niveau à mi-hauteur du réservoir (2).

2. Structure de support selon la revendication 1, comprenant une dite surface de support de réservoir (12) qui est tournée de manière générale vers le bas et une dite surface de support de cale (14) qui est tournée de manière générale vers le haut.

3. Structure de support selon la revendication 1 ou la revendication 2, comprenant une dite surface de support de réservoir (12) qui est tournée généralement vers le haut et une dite surface de support de cale (14) qui est tournée généralement vers le bas, de manière à limiter le mouvement vertical ascendant du réservoir (2) par rapport à la cale.

4. Structure de support selon la revendication 1, 2 ou 3, comprenant une pluralité de paires de surfaces de support coopérantes (12, 14) de réservoir et de cale.

5. Structure de support selon la revendication 4, dans laquelle une première paire de surfaces de support coopérantes (12, 14) de réservoir et de cale s'étendent dans une première direction de mouvement thermique du réservoir (2), et une seconde paire de surfaces de support coopérantes (12, 14) de réservoir et de cale s'étendent dans une seconde direction de mouvement thermique du réservoir différente de ladite première direction.

6. Structure de support selon la revendication 5, dans laquelle trois paires ou plus de surfaces de support coopérantes (12, 14) de réservoir et de cale sont prévues, chaque paire de surfaces coopérantes ayant une direction de mouvement thermique différente.

7. Structure de support selon l'une quelconque des revendications précédentes, dans laquelle la base de réservoir (6) est supportée sur le support de base de manière à empêcher un mouvement en un point particulier ou dans une région particulière de la base de réservoir par rapport à la cale, tout en permettant un mouvement relatif ailleurs sur la base de réservoir au cours d'une expansion ou d'une contraction thermique du réservoir (2).

8. Structure de support selon l'une quelconque des revendications précédentes, comprenant, à un premier niveau en hauteur du réservoir (2), des surfaces de support coopérantes (12, 14) de réservoir et de cale s'étendant dans une direction de mouvement thermique du réservoir et à un angle qui est intermédiaire entre une direction horizontale et une direction verticale, et à un second niveau en hauteur du réservoir, d'autres surfaces de support coopérantes (12, 14) de réservoir et de cale s'étendant dans une direction de mouvement thermique du réservoir et à un angle qui est intermédiaire entre une direction horizontale et une direction verticale.

9. Structure de support selon l'une quelconque des revendications précédentes, comprenant des moyens pour restreindre le mouvement de rotation du réservoir (2) autour d'un axe généralement vertical.

10. Structure de support selon la revendication 9, dans laquelle lesdits moyens permettant de restreindre le mouvement de rotation comprennent une surface de butée (20) disposée sur la cale et agencée pour coopérer avec une surface de butée (22) disposée sur le réservoir (2).

11. Structure de support selon la revendication 10, dans laquelle la surface de butée (20) de la cale et la surface de butée (22) du réservoir sont toutes deux dans un plan généralement vertical.

FIG. 1

FIG. 2

FIG. 3

FIG. 4

FIG. 5

FIG. 6

FIG. 7

FIG. 8

FIG. 10

FIG. 9

FIG. 11

EP 2 114 760 B1

FIG. 12

FIG. 13

FIG. 14

FIG. 15

FIG. 16

FIG. 17

FIG. 18

**EP 2 114 760 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1500799 A
- US 3908574 A
- US 4013030 A
- GB 2032087 A
- US 3261586 A
- EP 0619222 A